# EUROPEAN PATENT SPECIFICATION

(11) **EP 0 629 083 B1**
(45) Date of publication and mention of the grant of the patent: **23.12.1998**
(21) Application number: 94303961.0
(22) Date of filing: 02.06.1994
(51) Int. Cl.: H04N 5/44

(54) **Interlaced-to-progressive scanning converter having a double-smoothing function and a method therefor**
Abtastungsumwandler von Zeilensprung in ohne Zeilensprung mit einer doppelten Glättungsfunktion und Verfahren dafür
Convertisseur de balayage entrelacé en non-entrelacé à fonction de lissage double et procédé associé

(30) Priority: 05.06.1993 KR 9310176
(43) Date of publication of application: 14.12.1994
(73) Proprietor: Samsung Electronics Co., Ltd., Suwon-city, Kyungki-do 441-370 (KR)
(72) Inventor: Lee, Myeong-hwan, 104-712 Woncheon Jugong Apt., Suwon-City, Kyungki-Do (KR); Hwang, Humor c/o Jinyeol Sangka 2F, 220, Suwon-City- Kyungki-do (KR)
(74) Representative: Neill, Alastair William

(56) References cited:
- EP-A- 0 187 540
- EP-A- 0 252 763
- EP-A- 0 531 818
- AU-A- 8 936 611
- US-A- 4 682 230
- IEEE INTERNATIONAL SYMPOSIUM ON CIRCUITS AND SYSTEMS, vol.4/4, 3 May 1990, NEW ORLEANS (US) pages 3042 - 3045 JUHOLA J. ET AL. 'ON VLSI IMPLEMENTATION OF MEDIAN BASED FIELD RATE UP-CONVERSION'
- IEEE TRANSACTIONS ON ACOUSTICS, SPEECH, AND SIGNAL PROCESSING, vol.ASSP-23, no.6, December 1975 pages 552 - 557 LAWRENCE R. RABINER 'Applications of a Nonlinear Smoothing Algorithm to Speech Processing'
- IEEE TRANSACTIONS ON ACOUSTICS, SPEECH, AND SIGNAL PROCESSING, vol.ASSP-31, no.6, December 1983 pages 1342 - 1349 ALAN C. BOVIC 'A Generalization of Median Filtering Using Linear Combinations of Order Statistics'

## Description

The invention relates to a scanning converter for converting the scanning method for a television signal from an interlaced scanning method into a progressive scanning method and to a method therefor, and more particularly, to an interlaced-to-progressive scanning converter which improves the effects of eliminating noise and preventing picture quality deterioration by adopting a double-smoothing function using median-filtering, and to a method therefor.

In general, in an image signal processor such as those used in televisions, facsimiles or medical appliances, the image signal based on an interlaced scanning method is converted into a progressive scanning signal for improving picture quality, which is otherwise somewhat deteriorated by the use of interlaced scanning.

In the case of a television signal, the interlaced scanning method is used for an effective utilization of transmission bands and the physical properties of a television receiver may result in deterioration phenomena such as inter-line flickering or line crawling. Moreover, in the pursuit of large high-quality television screens, scanning lines are exposed on a screen along with such deterioration phenomena.

In order to alleviate the picture quality deterioration due to the interlaced scanning method as described above, the scanning method of a television signal is converted into a progressive scanning method.

In the early days, the interlaced-to-progressive scanning converter adopted the method of processing a signal on horizontal and vertical space plane. However, according to the recent pursuit of high picture quality for televisions and the reduction of memory cost in connection therewith, motion-adaptive signal processing is being generalized for producing televisions having high picture quality.

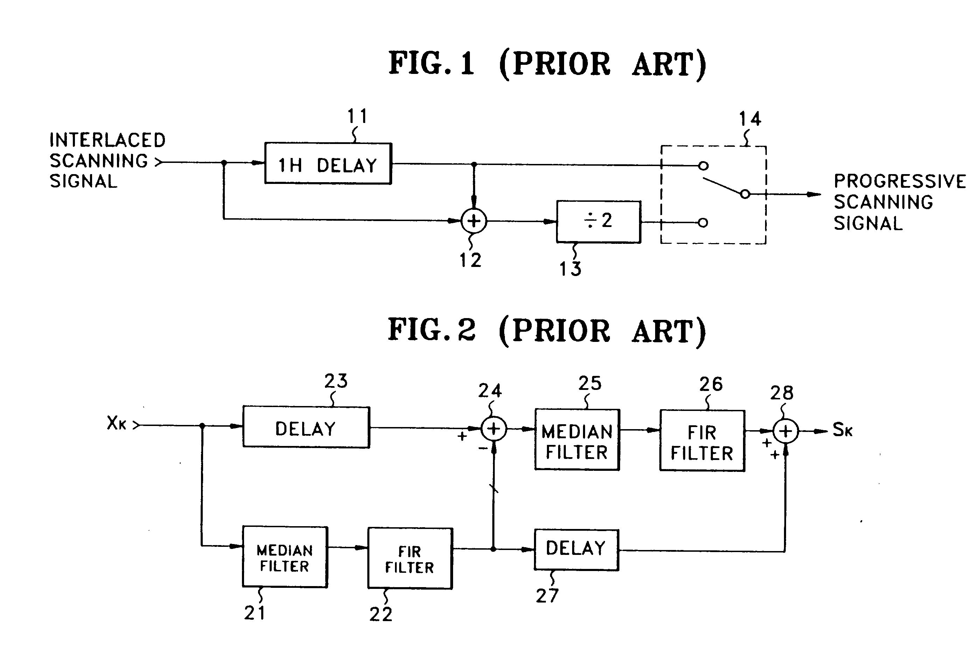

In the prior art system of Figure 1, an interlaced-to-progressive converter is shown, the converter performs a conversion by linear interpolation using a vertical median, delays the interlaced scanning signal input from a 1H delay 11 and applies the delayed signal to a first input terminal of a selector 14. Here, an adder 12 adds the input interlaced scanning signal to the 1H delayed signal and applies the resultant signal to a second input terminal of the selector 14 through a divider-by-two circuit 13. Then, selector 14 selectively outputs the 1H delayed signal or the divided-by-two signal alternately at a double speed of interlaced scanning, to thereby output a progressive scanning signal.

However, the interlaced-to-progressive scanning converter shown in Figure 1 may generate a blurriness in the displayed image.

Interlaced-to-progressive scanning converters which perform a conversion by three-dimensional interpolation using motion-adaptive signal processing, improve the resolution of motionless areas but cannot prevent a stepped edge which is a phenomenon resulting in picture contour deterioration. At this time, a separate motion detector must be attached and the hardware becomes complex due to the necessity for using a field memory, and the cost is increased accordingly.

Meanwhile, in the case of a transmitted image signal or a signal reproduced from a recorded image signal, picture quality is deteriorated due to the mixing of an impulse noise or Gaussian noise within a given channel. In this case, when performing motion-adaptive signal processing using motion detection, since an analog correlation which can be indicated as the level difference between a current frame and a previous frame is obtained and the extent of motion is calculated, pictures which include a noise signal may cause a malfunction during detection. Although the interlaced-to-progressive scanning conversion is performed, a deteriorated picture may be obtained due to the presence of noise.

Impulse noise on a picture signal may be generated by a low signal-to-noise ratio of an FM satellite broadcast signal or by an electromagnetic interference in the television receiver.

To solve the aforementioned problems, there has been proposed an interlaced-to-progressive scanning converting method in which a median filter having no motion detecting function but having an effective noise preventing function is adopted.

The interlaced-to-progressive scanning converting method using a median filter is disclosed in a paper by Licia Capodiferro entitled "Interlaced-to-progressive Conversion by Median-filtering" in *Proceedings of the 3rd International Workshop on HDTV* (Torino, Italy; September 1989). Here, the median filter takes a median value between adjacent data, and thus, the hardware implementation of such a converter is simple.

However, the interlaced-to-progressive scanning converting method using the median filter results in a stepped edge phenomenon which is more apparent than in the method using the motion-adaptive signal processing. Also, if noise is mixed on the channel, since the pixels of the noise components are used for an interpolation, the signal-to-noise ratio is lower than the case of the interlaced-to-progressive scanning converting method using a linear interpolation.

To compensate for such shortcomings, a finite impulse response (FIR) filter may be used together with the median filter for pre-processing the interlaced-to-progressive conversion. The FIR filter is effective in eliminating the Gaussian noise but is not effective in eliminating the impulse noise. On the other hand, the median filter is effective in eliminating the impulse noise but is not effective in eliminating the Gaussian noise. Accordingly, as shown in Figure 2, a double-smoothing method which is a combination of the median filter and FIR filter has been proposed.

The double-smoothing method shown in Figure 2 is disclosed in a paper by L.R. Rabiner, M.R. Sambur and C.E. Schmidt entitled "Applications of a Non-linear Smoothing Algorithm for Speech Processing" in *IEEE Trans. on ASSP,* Vol.23 (December 1975), pp552-557.

In Figure 2, the impulse noise and Gaussian noise of the interlaced scanning signal xₖ including noise components are filtered by the median filter 21 and the FIR filter 22. The input signal xₖ, being delayed in a delay 23 for a predetermined time, is subtracted from a filtered signal in a subtractor 24 to thereby obtain an error signal corresponding to the noise components. The error signal is again filtered by the median filter 25 and FIR filter 26. The filtered signal immediately becomes a source signal included in the noise component. This source signal and a source signal output from the FIR filter 22 and passed through the delay 27 are summed in an adder 28 to thereby obtain a final source signal sₖ.

However, by the interlaced-to-progressive scanning converting method adopting such double-smoothing method in processing a picture signal, the picture signal tends to be excessively repressed and a stepped edge still remains due to the bias error of the edge portion generated in the median filter.

Meanwhile, an adaptive median filter system is disclosed in U.S. Patent No. 4,682,230 wherein the relative density of an impulse noise component included in an input signal is detected. Here, a control signal corresponding to the detected noise density is generated, and a signal sampled for a median-filtering is adaptively filtered according to the control signal.

It is an aim of preferred embodiments of the invention to provide an interlaced-to-progressive scanning converting apparatus having a double-smoothing function by which Gaussian noise and impulse noise can be effectively eliminated while picture contours are maintained.

It is another aim to provide an interlaced-to-progressive scanning converting method having a double-smoothing function.

According to a first aspect of the invention there is provided an interlaced-to-progressive scanning converting apparatus having a double smoothing function, wherein an interlaced scanning television signal is converted into a progressive scanning television signal, said apparatus comprising:
a double smoothing circuit (30) for receiving an input interlaced scanning signal and performing a double smoothing function thereon;
interpolation signal generating means (40) for generating a line delayed signal and an interpolation scanning line signal from an output signal of said double smoothing circuit; and
means (44) for generating a progressive scanning signal from the signals generated by said interpolation signal generating means (40);
characterised in that said double smoothing circuit comprises :
first filter means (31, 32, 33) for median-filtering an input interlaced scanning video signal, applying a weighting coefficient according to the degree to which the filtered signal exceeds a predetermined critical value and outputting the result.

Preferably, the first filter means comprises:
first median-filtering means for median-filtering the input interlaced scanning signal;
first censoring means for receiving the median-filtered signal from said first median-filtering means and censoring it beyond a predetermined critical value; and
first order-statistics-filtering OSF means for receiving the signal censored by said first censoring means, setting a predetermined coefficient to the received signal and outputting the result.
Said apparatus preferably further comprises:
first delay means for delaying said input interlaced scanning signal for a predetermined time;
subtracting means for subtracting the output signal of said first OSF means from the output signal of said first delay means and then outputting an error signal;
second filtering means for double-smoothing the output signal from said subtracting means;
second delay means for delaying the output signal of said OSF means for a predetermined time; and
adding means for adding said double-smoothed signal to the output signal of said second delay means and then supplying the sum to said interpolation signal generating means.

Said critical value for censoring may be obtained by adding the output signal of said first median-filtering means to the standard deviation (a) of the noise distribution, alternatively/additionally, said critical value may be obtained from a level difference (h) at an edge of input data.

The said second filtering means preferably comprises:
second median filtering means for median-filtering the output signal from said subtracting means;
second censoring means for censoring the signal median-filtered by said second median-filtering means; and
second order-statistics-filtering means for order-statistics-filtering the signal censored by said second censoring means.

Said apparatus preferably further comprises noise detecting means for receiving said input interlaced scanning signal and thereby detecting the extent of the noise included in the input signal and then supplying the standard deviation (a) of the noise distribution to said censoring means.

Preferably, said apparatus further comprises switching means (SW) having a first input terminal to which said interlaced scanning signal is applied, a second input terminal to which the output signal of said double smoothing circuit is applied to and an output terminal which is connected to said interpolation signal generating means, the switching means (SW) being arranged to perform a switching operation according to the extent of the noise detected by said noise detecting means.

Preferably, said first OSF means sets a weighting coefficient as a constant value to then calculate a mean value if pixel data of an input censored signal is greater than or equal to a first predetermined number, passes a median value if pixel data of an input censored signal is less than or equal to a second predetermined number, and sets a plurality of weighting coefficients so as to be linear filtered if the number of pixel data of an input censored signal comes between first and second predetermined numbers.

The said interpolation signal generating means may comprise:
scanning line delay means for delaying the output signal of said double-smoothing circuit by one scanning line period;
field delay means for delaying the output signal of said scanning line delay means by one field period; and
median means for receiving each output signal of double-smoothing circuit, scanning line delay means and field delay means and thereby calculating a mean value thereof.
Said progressive scanning signal generating means preferably receives each output signal of said scanning line delay means and median means and then alternatively outputs two input signals at a double speed of the input signal.

According to a second aspect, there is provided an interlaced-to-progressive scanning converting method having a double-smoothing function wherein an interlaced scanning television signal is converted into a progressive scanning television signal, the method comprising the steps of:
a double smoothing step of receiving an interlaced scanning signal and performing a double smoothing function thereon;
an interpolation signal generating step of generating a line delayed signal and an interpolation scanning line signal from the output signal of the double smoothing step; and
a progressive scanning signal generating step of generating a progressive scanning signal from the signals generated by said interpolation signal generating step,
characterised by :-
a median-filtering step of median-filtering the input interlaced scanning signal;
a censoring step of censoring the signal median-filtered output by said median-filtering step beyond a predetermined critical value; and
an order-statistics-filtering OSF step of receiving the signal censored by said censoring step, setting a predetermined weighting coefficient to the received signal and then outputting the result.

Said method preferably further comprises the steps of:
firstly delaying said input interlaced scanning signal for a predetermined time;
subtracting the output signal of said order statistics filtering (OSF) step from the output signal of said first delaying step;
double-smoothing the output signal of said subtracting step;
secondly delaying the output signal of said OSF step for a predetermined time; and
summing said double-smoothed signal and the output signal of said second delaying step and then supplying the resultant sum to said interpolation signal generating step.
Said critical value may be obtained by adding the output signal of said median-filtering step to the standard deviation (σ) of the noise mixed with said output signal, alternatively/additionally, said critical value may be obtained from the level difference (h) at the edge of input data.

Said doubly-smoothing step preferably comprises the steps of:
median-filtering said signal output by said subtracting step;
censoring the signal median-filtered by said median-filtering step; and
order statistics filtering (OSF) the signal censored by said censoring step.

Said interpolation signal generating step preferably comprises the steps of:
delaying the output signal of said OSF step by a predetermined scanning line period (a scanning line delaying step);
delaying the output signal of said scanning line delaying step by a predetermined field period (a field delaying step); and
receiving each output signal of said OSF step, scanning line delaying step and field delaying step, and then calculating the median value thereof (a median step).

Preferably, the method further comprises a noise detecting step for receiving said input interlaced scanning signal and thereby detecting the extent of the noise included in the input signal and then supplying the standard deviation value varied according to the extent thereof to said censoring step.

Said method preferably further comprises a selecting step for selecting said interlaced scanning signal or the output signal of said OSF step according to the extent of the noise detected in said noise detecting step and thereby outputting the selected signal to said scanning line interpolating step.

Preferably, in said OSF step, a weighting coefficient is set as a constant value to thereby calculate the mean value if the pixel data of the input censored signal is greater than or equal to a first predetermined number, a median value is passed if the pixel data of the input censored signal is less than or equal to a second predetermined number, and a plurality of weighting coefficients are set so as to be linear-filtered if the pixel data of the input censored signal comes between the first and second predetermined numbers.

Preferably, in said progressive scanning signal generating step, each output signal of said scanning line delaying step and median step is received, and thereby two input signals are alternatively output at a double speed of the input signal.

For a better understanding of the invention, and to show how embodiments of the same may be carried into effect, reference will now be made, by way of example, to the accompanying diagrammatic drawings, in which:
Figure 1 is a block diagram of a conventional interlaced-to-progressive scanning converting apparatus;
Figure 2 is a block diagram of a conventional double-smoothing apparatus;
Figure 3 is a block diagram of a first embodiment of the interlaced-to-progressive converting apparatus having a double-smoothing function;
Figure 4 depicts pixel points for illustrating median-filtering adopted for extracting space correlative information;
Figure 5 is a detailed block diagram for explaining the median filter shown in Figure 3;
Figure 6 is a schematic block diagram of second embodiment of the interlaced-to-progressive converting apparatus having a double-smoothing function; and
Figure 7 is a schematic block diagram of still another embodiment of the interlaced-to-progressive converting apparatus having a double-smoothing function.

The interlaced-to-progressive conversion is based on a three-point vertical median-filtering in order to reduce inter-line flickering and line crawling generated in interlaced data. The three points are the interlaced data processed by a double-smoothing function. The double-smoothing is based on an order statistics filtering (OSF) performed by censoring, to eliminate impulse and/or non-impulse noise while a signal edge is maintained.

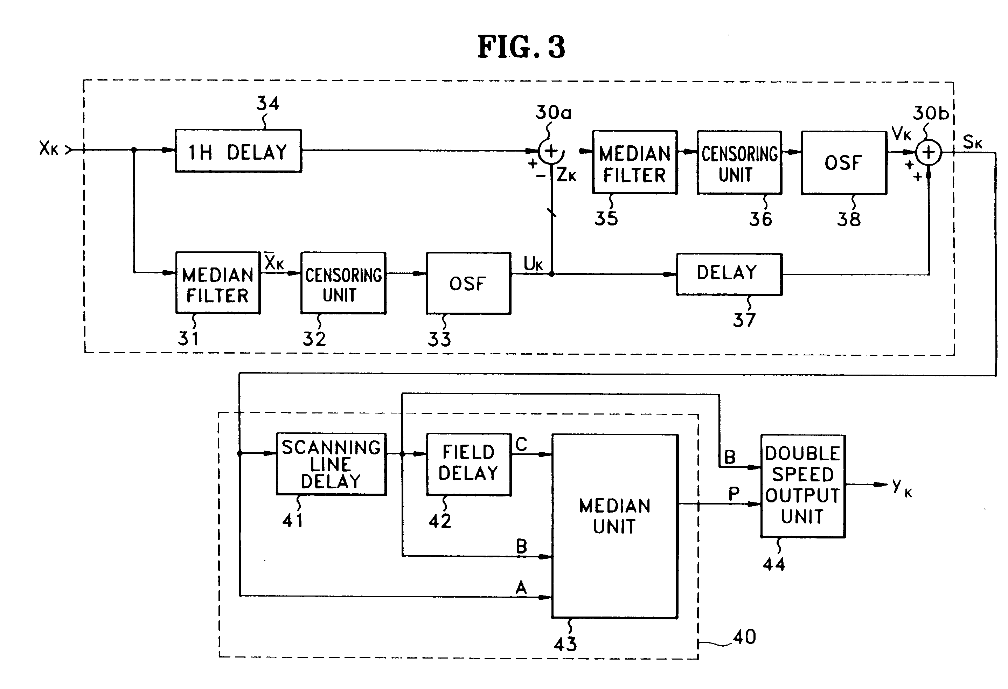

Figure 3 is a block diagram of an embodiment of the interlaced-to-progressive converting apparatus having a double-smoothing function according to the present invention.

The embodiment of Figure 3 is largely composed of two blocks. One is a block for double-smoothing an interlaced scanning signal xₖ having noise components to produce a smoothed interlace signal Sₖ, and the other is a block for interlaced-to-progressive scanning conversion of the smoothed interlaced signal sₖ.

In a double-smoother 30, if a signal has a distinct edge component distinct, since the signal is collapsed by an impulse noise and linear filtering damages the signal edge, the edge of the median filter allows a bias error depending on noise power and the magnitude of the signal edge. In addition, the median filter cannot smooth non-impulse noise as well as the linear filter can. To eliminate this characteristic, a double-smoothing method is adopted using OSF accompanied by a censoring operation.

The output from the OSF is a linear combination of the order statistics in the censored data group. The reference point for censoring data is set as a median value within a window. The OSF provides a compromise between the median filter and motion average filter.

In an interlaced-to-progressive scanning converter 40, the input pixels for three-point vertical median-filtering are two pixels from a present field and one pixel from a previous field. Input pixels are disposed in adjacent vertical lines but are horizontally located at the same position. Three-point vertical median-filtering is an adaptive method that automatically switches between a motion-screen and a still-screen without complicated motion detection and edge detection, thereby reducing flickering.

First, a double smoother 30 will be described in detail.

The interlaced scanning signal xₖ including noise can be indicated as the sum of source signal component sₖ and noise component nₖ as follows.${\text{x}}_{\text{k}} {\text{= s}}_{\text{k}} {\text{+ n}}_{\text{k}}$

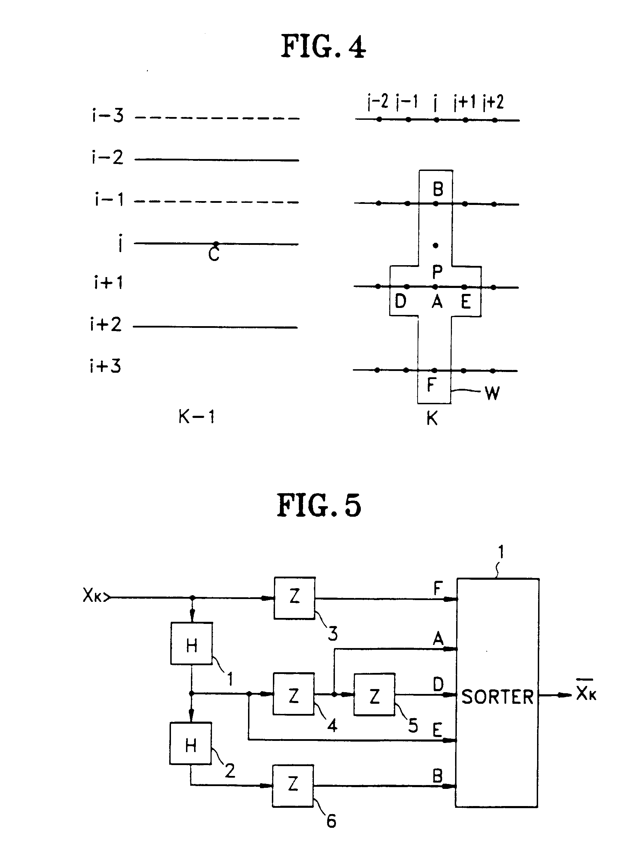

In a median filter 31, the interlaced scanning signal xₖ is median-filtered by the window w shown in Figure 4, thereby reducing the impulse noise component.

Figure 4 is a sample positional diagram used for extracting space correlative information, where i represents a vertical line number, j represents a pixel number of line i, K represents a field number, and P represents an interpolated pixel.

Figure 5 is a detailed block diagram for the median-filter shown in Figure 3. The median filter is composed of two scanning line delays 1 and 2, four sample delays 3 to 6, and a five pixel sorter 7, and performs five-pixel median-filtering as shown in Figure 4.

Referring to Figure 5, the interlaced scanning signal xₖ is delayed for the period of one sample by delay 3 and is output to sorter 7 as a sample F.

The interlaced scanning signal xₖ is delayed by the scanning line delay 1 for the period of one line and delayed by delays 4 and 5 for the period of two samples, thereby being output to sorter 7 as a sample D. The output signal of the delay 4 is applied to sorter 7 as a sample A.

Also, the output signal of scanning line delay 1 is delayed by scanning line delay 2 for the period of one line, then passes through the delay 6 to thereby be delayed for the period of one sample, and is output to sorter 7 as a sample B.

In Figure 4, five pixels A, B, D, E and F being located within the window w of the present field K are supplied simultaneously to sorter 7 by scanning line delays 1 and 2 and sample delays 3, 4, 5 and 6. Then, sorter 7 sorts the input samples in the order according to data amplitude and outputs the median value.

A median filter, such as median filter 31 of Figure 3, effectively filters impulse noise but, with respect to non-impulse noise, cannot filter as effectively as a linear filter.

Therefore, a smoothing filter which is a combination of the censoring unit 32 and OSF 33 is adopted to the median-filtered signal. The output signal $\overline{{\text{x}}_{\text{k}}}$ of median filter 31 becomes a reference point of censoring by censoring unit 32 and the reference point is required not to be outliers.

The value of $\overline{{\text{x}}_{\text{k}}}$ + 3σ (where σ represents the standard deviation of the noise distribution) is used as the bias value of the censored data. Additionally, to prevent the case in which the samples belonging to the other level of the edge are used for censoring, another condition (c) for selecting the critical value for censoring is added to the censored data ($\overline{{\text{x}}_{\text{k}}}$).

Thus, assuming that the censored data xⱼ is an element of Lc, i.e., xᵢ ∈ Lc,${\text{Lc = {x}}_{\text{j}} \text{|} \overline{{\text{x}}_{\text{k}}} {\text{- c ≤ x}}_{\text{j}} \text{≤} \overline{{\text{x}}_{\text{k}}} \text{+ c}}$ where c equals min{3σ, h/2}. Also, 3a is experimentally determined according to channel characteristics or can be any other value.

In order to prevent an edge portion from being included in such a bias value and smoothing process, the censoring process has another critical value h/2. Here, h represents edge height expressed as a level difference between edges.

Gaussian non-impulse noise components are mostly within 3σ. Here, if h/2 value is less than 3σ, the h/2 value is selected as a critical value, and if 3σ is less than h/2, 3σ is selected as a critical value. Also, in the event that separate means for calculating a are not provided, the h value can be set at the discretion of a system designer, e.g., to 30.

The signal censored in the above manner is supplied to OSF 33.

An embodiment of the OSF means can be found in a paper by Alan C. Vovik, Thomas S. Huang and David C. Munson entitled "A Generalization of Median-filtering using Linear Combinations of Order Statistics" in *IEEE Trans. on Acoustics, Speech and Signal Processing,* Vol.31, No.6 (December 1993), pp1342-1350.

OSF 33 is a filter for mainly eliminating Gaussian noise and the output thereof is as follows. 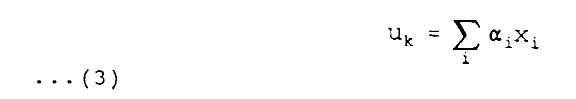 where xᵢ is less than or equal to xⱼ given that i is less than or equal to j, and αᵢ is a weighting coefficient.

In this manner, the OSF aligns the censored pixel data in the order of amplitude, smooths out the noise components remaining after median-filtering, and removes the stepped edge generated by the interlaced-to-progressive conversion, by setting a predetermined weighting coefficient with respect to each pixel data.

If the weighting coefficients αᵢ of the OSF are all "1's," the OSF obtains a median value. If only pixel data corresponding to the median value are weighted by a weighting coefficient of "1," the OSF operates as a median-filter. If only the largest pixel data is weighted as "1," the OSF becomes a maximum filter. If only the smallest pixel data is weighted as "1," the OSF becomes a minimum filter. If the weighting coefficient αᵢ is differently set for each pixel data, the OSF becomes a linear low-pass filter.

The combination of the aforementioned filters can be embodied in OSF 33 according to the output of censoring unit 32. For example, in the case of a five-point window as shown in Figure 4, if four or five points are censored, the weighting coefficients are set as "1" and their mean value is obtained. If three are censored, the weighting coefficients are set as 1/4, 1/2 and 1/4, respectively, to then be filtered. If one or two are censored, the reference value, i.e., the median value is passed without being changed. OSF 33 can be replaced by a linear-weighted order statistics filter (LWOS filter) or a linear combination of weighted order statistics filter (LCWOS filter) , each of which are similar to OSF 33 in characteristics.

Since smoothing based on order statistics filtering preceded by censoring is undesirable, double-smoothing is performed.

By a subtractor 30a, the signal uₖ output from OSF 33 is subtracted from the original interlaced scanning signal xₖ delayed in a delay 34 for time matching. The resultant error signal of the subtraction can be expressed by equation (5). That is, since uₖ = sₖ ... (4) Then,${\text{z}}_{\text{k}} {\text{= x}}_{\text{k}} {\text{- u}}_{\text{k}} {\text{= n}}_{\text{k}}$

Here, sₖ and nₖ are estimates for signal and noise, respectively.

While the error signal zₖ passes through a median filter 35, censoring unit 36 and OSF 37, signal component is detected from the signal again from which noise component is removed primarily.

Thereafter, the detected signal vₖ is primarily double-smoothed and then summed with the signal uₖ delayed in a delay 38 for a predetermined time in an adder 30b, thereby finally obtaining a double-smoothed signal sₖ. That is,${\text{w}}_{\text{k}} {\text{= v}}_{\text{k}} {\text{+ u}}_{\text{k}} {\text{= s}}_{\text{k}}$

Next, the operation of interlaced-to-progressive converter 40 for three-point vertical median-filtering will be described with reference to Figure 4.

The pixel points A, B and C shown in Figure 4 are double-smoothed data. The points A, B and C are used in the interlaced-to-progressive scanning conversion mode.

In this manner, the double-smoothed interlaced scanning signal sₖ obtains pixel values A, B and C shown in Figure 4 by means of a scanning line delay 41 and field delay 42, and the pixel value P to be interpolated is obtained as their median value. That is to say,$\text{P = med {A, B, C}}$

Since the interpolation using the median value have a high spatial correlativity in a motion picture, data from pixels A and B has a high probability to be selected. Also, in a still picture, data from pixel C is liable to be selected. Therefore, the interpolation is performed selectively according to the motion.

Here, the pixels A, B and C are all double-smoothed data and the pixel data P to be interpolated is selected by a median unit 43 which is a three-pixel sorter.

Thereafter, a double speed output unit 44 scans the double-smoothed pixel B and the interpolated pixel P at a double speed and thereby outputs a picture signal yₖ by a progressive scanning method.

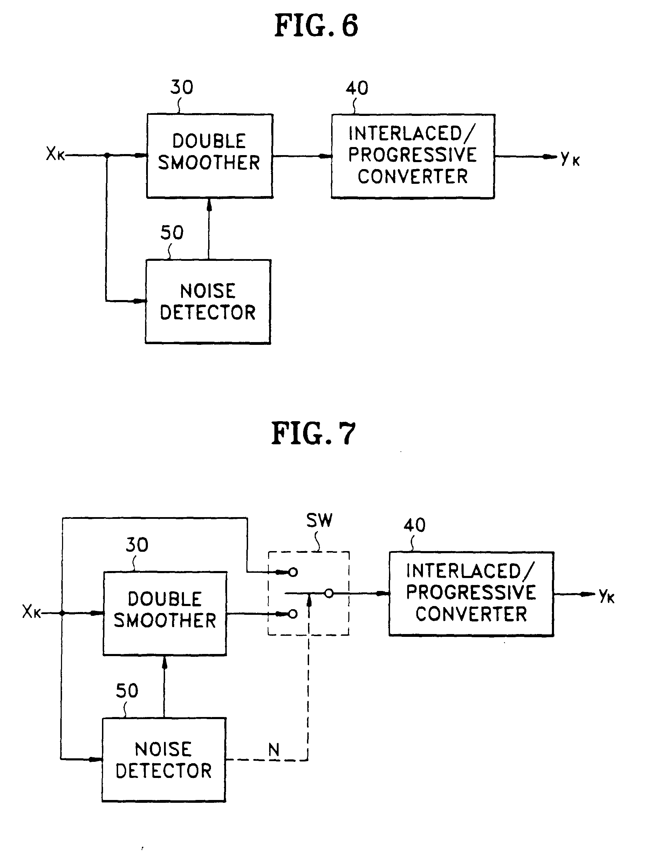

Figure 6 is a schematic block diagram showing a further embodiment of an interlaced-to-progressive scanning converting apparatus having a double-smoothing function.

Referring to the embodiment of Figure 6, the interlaced-to-progressive scanning converting apparatus comprises a double smoother 30, an interlaced/progressive converter 40, which are the same as those shown in Figure 3, and a noise detector 50. The noise detector 50 measures noise from the input interlaced scanning signal xₖ, and thereby obtains the standard deviation a of the noise and supplies the value σ to the censoring units 32 and 36 of the double smoother 30.

Then, double smoother 30 adaptively varies the critical value for censoring by the value a variable according to the noise extent of the input signal xₖ.

This will be described in detail.

In the above equation (2), the simulation result shows that h does not vary the performance sensitively. Therefore, it is possible to set the value h as a given value in manufacturing. Also, since the area beyond 3σ is statistically regarded as an abnormal state, where σ is the standard deviation of noise component, the basis of censoring is set as 3σ. Here, σ corresponds exactly to Gaussian noise and is expressed in the following equation (7).

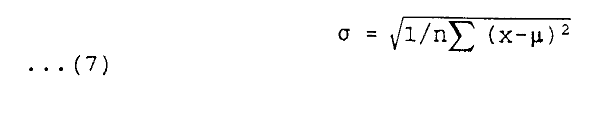

Here, since x represents an input signal and µ represents a mean value, it is much easier to calculate the value σ in a flat area. For example, it is possible to check the variation in the portion without a signal component in a vertical blanking period.

In other words, the calculation of equation (7), which involves finding the square root of a squared value, is complicated. More simply, the noise state can be estimated from the sum of a given period of the flat area and the value can be replaced by σ.

Assuming that the level of the flat portion is zero, it is possible to evaluate the noise amount quantitatively by an absolute value sum.

If the noise amount (absolute value sum) is large, σ is set to be large, and vice versa. Strictly speaking, since σ is an evaluation basis for the Gaussian noise, in order to demonstrate fully the characteristics of the present invention, it is desirable to calculate a after the impulse noise is eliminated.

Figure 7 is a schematic block diagram of the interlaced-to-progressive scanning converting apparatus having a double-smoothing function according to still another embodiment of the present invention. When compared with the device shown Figure 6, the apparatus further includes a switch SW whose first input terminal is connected with the input terminal to which an interlaced-to-progressive signal is input, whose second input terminal is connected with the output of the double smoother 30, and whose output is connected with the input of the interlaced-to-progressive converter 40.

As shown in Figure 7, the switch SW selects either the input signal xₖ or double-smoothed output signal and supplies the selected signal to the interlaced-to-progressive converter 40. At this time, the switching operation of the switch SW is controlled according to the noise extent N detected by the noise detector 50. That is to say, if there is no noise in the input signal xₖ, the double-smoothing with respect to the input signal is omitted and only the interlaced-to-progressive conversion is performed. If there is noise in the input signal xₖ, the input signal xₖ is double-smoothed in the double smoother 30 and then the interlaced-to-progressive conversion is performed.

The interlaced-to-progressive scanning converting apparatus according to the present invention is adopted for image apparatuses such as televisions, facsimiles or medical appliances.

As described above, the interlaced-to-progressive scanning converting apparatus having a double-smoothing function, and the method therefor, according to the present invention, can eliminate impulse noise and Gaussian noise effectively and can prevent the occurrence of a stepped edge phenomenon generated in an interlaced-to-progressive conversion, by performing double-smoothing composed of median-filtering, censoring and order statistics filtering with respect to an interlaced scanning signal and then converting it into a progressive scanning signal.

## Claims

1. An interlaced-to-progressive scanning converting apparatus having a double smoothing function, wherein an interlaced scanning television signal is converted into a progressive scanning television signal, said apparatus comprising:
a double smoothing circuit (30) for receiving an input interlaced scanning signal and performing a double smoothing function thereon;
interpolation signal generating means (40) for generating a line delayed signal and an interpolation scanning line signal from an output signal of said double smoothing circuit; and
means (44) for generating a progressive scanning signal from the signals generated by said interpolation signal generating means (40);
characterised in that said double smoothing circuit comprises :
first filter means (31, 32, 33) for median-filtering said input interlaced scanning video signal, applying a weighting coefficient according to the degree to which the filtered signal exceeds a predetermined critical value and outputting the result.

2. Apparatus according to claim 1, wherein said first filter means (31, 32, 33) comprises :-
first median-filtering means (31) for median-filtering said input interlaced scanning signal;
first censoring means (32) for receiving the median-filtered signal from said first median-filtering means (31) and censoring it beyond a predetermined critical value; and
first order-statistics-filtering OSF means (33) for receiving the signal censored by said first censoring means (32), setting a predetermined weighting coefficient to the received signal and outputting the result.

3. Apparatus as claimed in claim 1 or 2, said apparatus further comprising:
first delay means (34) for delaying said input interlaced scanning signal for a predetermined time;
subtracting means (30a) for subtracting the output signal of said first OSF means (33) from the output signal of said first delay means (34) and then outputting an error signal;
second filtering means (35, 36, 38) for double-smoothing the output signal from said subtracting means;
second delay means (37) for delaying the output signal of said first OSF means (33) for a predetermined time; and
adding means (30b) for adding said double-smoothed signal to the output signal of said second delay means (37) and then supplying the sum to said interpolation signal generating means (40).

4. Apparatus as claimed in claim 3, wherein said second filter means (35, 36, 38) comprises:
second median filtering means (35) for median-filtering the output signal from said subtracting means (30a);
second censoring means (36) for censoring the signal median-filtered by said second median-filtering means (35); and
second order-statistics-filtering OSF means (38) for order-statistics-filtering the signal censored by said second censoring means (36).

5. Apparatus as claimed in any preceding claim, wherein said critical value for censoring is obtained by adding the output signal of said first median-filtering means (31) to the standard deviation (σ) of the noise distribution.

6. Apparatus as claimed in any preceding claim, wherein said critical value for censoring is obtained from a level difference (h) at an edge of input data.

7. Apparatus as claimed in claim 6 when dependent upon claim 5, wherein said critical value is selected to be the lower of a value based on said standard deviation (σ) or a value based on said level difference (h).

8. Apparatus as claimed in claims 5 or 7, said apparatus further comprising noise detecting means (50) for receiving said input interlaced scanning signal and detecting the extent of the noise included in the input signal and then supplying the standard deviation (σ) of the noise distribution to said censoring means (32, 36).

9. Apparatus as claimed in claim 8, said apparatus further comprising switching means (SW) having a first input terminal to which said interlaced scanning signal is applied, a second input terminal to which the output signal of said double smoothing circuit (30) is applied and an output terminal which is connected to said interpolation signal generating means (40), the switching means (SW) being arranged to perform a switching operation according to the extent of the noise detected by said noise detecting means (50).

10. Apparatus as claimed in any of claims 2 to 9, wherein said first OSF means (33) sets a weighting coefficient as a constant value to then calculate a mean value if pixel data of an input censored signal is greater than or equal to a first predetermined number, passes a median value if pixel data of an input censored signal is less than or equal to a second predetermined number, and sets a plurality of weighting coefficients so as to be linear filtered if the number of pixel data of an input censored signal comes between first and second predetermined numbers.

11. Apparatus as claimed in any of the preceding claims, wherein said interpolation signal generating means (40) comprises:
scanning line delay means (41) for delaying the output signal of said double-smoothing circuit (30) by one scanning line period;
field delay means (42) for delaying the output signal of said scanning line delay means (41) by one field period; and
median means (43) for receiving each output signal of double-smoothing circuit (3), scanning line delay means (41) and field delay means (42) and thereby calculating a mean value thereof.

12. Apparatus as claimed in claim 11, wherein said progressive scanning signal generating means (44) receives each output signal of said scanning line delay means (41) and median means (43) and then alternatively outputs two input signals at a double speed of the input signal.

13. An interlaced-to-progressive scanning converting method having a double-smoothing function wherein an interlaced scanning television signal is converted into a progressive scanning television signal, the method comprising the steps of:
a double smoothing step of receiving an interlaced scanning signal and performing a double smoothing function thereon;
an interpolation signal generating step of generating a line delayed signal and an interpolation scanning line signal from the output signal of the double smoothing step; and
a progressive scanning signal generating step of generating a progressive scanning signal from the signals generated by said interpolation signal generating step,
characterised by :-
a median-filtering step of median-filtering the input interlaced scanning signal;
a censoring step of censoring the signal median-filtered output by said median-filtering step beyond a predetermined critical value; and
an order-statistics-filtering OSF step of receiving the signal censored by said censoring step, setting a predetermined weighting coefficient to the received signal and then outputting the result.

14. A method as claimed in claim 13, said method further comprising the steps of:
firstly delaying said input interlaced scanning signal for a predetermined time;
subtracting the output signal of said order statistics filtering (OSF) step from the output signal of said first delaying step;
double-smoothing the output signal of said subtracting step;
secondly delaying the output signal of said OSF step for a predetermined time; and
summing said double-smoothed signal and the output signal of said second delaying step and then supplying the resultant sum to said interpolation signal generating step.

15. A method as claimed in claim 13 or 14, wherein said critical value is obtained by adding the output signal of said median-filtering step to the standard deviation (a) of the noise mixed with said output signal.

16. A method as claimed in claim 13, 14 or 15 wherein said critical value is obtained from the level difference (h) at the edge of input data.

17. A method as claimed in claim 14, or claims 15 or 16 as dependant upon claim 14, wherein said double-smoothing step comprises the steps of:
median-filtering said signal output by said subtracting step;
censoring the signal median-filtered by said median-filtering step; and
order-statistics-filtering OSF the signal censored by said censoring step.

18. A method as claimed in any of claims 13 to 17, wherein said interpolation signal generating step comprises the steps of:
delaying the output signal of said OSF step by a predetermined scanning line period;
delaying the output signal of said scanning line delaying step by a predetermined field period; and
receiving each output signal of said OSF step, scanning line delaying step and field delaying step, and then calculating the median value thereof.

19. A method as claimed in any of claims 13 to 18, wherein the method further comprises a noise detecting step for receiving said input interlaced scanning signal and detecting the extent of the noise included in the input signal and then supplying the standard deviation value varied according to the extent thereof to said censoring step.

20. A method as claimed in claim 19, said method further comprising a selecting step for selecting said interlaced scanning signal or the output signal of said OSF step according to the extent of the noise detected in said noise detecting step and outputting the selected signal to said scanning line interpolating step.

21. A method as claimed in any of claims 13 to 22 wherein, in said OSF step, a weighting coefficient is set as a constant value to thereby calculate the mean value if the pixel data of the input censored signal is greater than or equal to a first predetermined number, a median value is passed if the pixel data of the input censored signal is less than or equal to a second predetermined number, and a plurality of weighting coefficients are set so as to be linear-filtered if the pixel data of the input censored signal comes between the first and second predetermined numbers.

22. A method as claimed in any of claims 13 to 22, wherein, in said progressive scanning signal generating step, each output signal of said scanning line delaying step and median step is received, and two input signals are alternatively output at a double speed of the input signal.

## Patentansprüche

1. Vorrichtung zum Umwandeln von Zeilensprungabtastung in fortlaufende Abtastung mit einer Doppel- Glättungsfunktion, in der ein Fernsehsignal mit Zeilensprungabtastung in ein Fernsehsignal mit fortlaufender Abtastung umgewandelt wird, wobei die Vorrichtung umfaßt:
eine Doppel-Glättungsschaltung (30), die ein Eingangssignal mit Zeilensprungabtastung empfängt und dieses einem Doppel-Glättungsvorgang unterzieht;
eine Interpolationssignal-Erzeugungseinrichtung (40), die ein Zeilenverzögerungssignal und ein Interpolations-Abtastzeilensignal aus einem Ausgangssignal der Doppel-Glättungsschaltung erzeugt; und
eine Einrichtung (44), die ein Signal fortlaufender Abtastung aus den von der Interpolationssignal-Erzeugungseinrichtung (40) erzeugten Signalen erzeugt;
**dadurch gekennzeichnet,** daß die Doppel-Glättungsschaltung umfaßt:
eine erste Filtereinrichtung (31, 32, 33), die Median-Filtern des Eingangs-Zeilensprungabtastungs-Videosignals ausführt, entsprechend dem Grad, um den das gefilterte Signal einen vorgegebenen kritischen Wert übersteigt, einen Wichtungsfaktor zur Anwendung bringt und das Ergebnis ausgibt.

2. Vorrichtung nach Anspruch 1, wobei die erste Filtereinrichtung (31, 32, 33) umfaßt:
eine erste Median-Filtereinrichtung (31), die Median-Filtern des eingegebenen Zeilensprungabtastungssignals ausführt;
eine erste Zensureinrichtung (32), die das mediangefilterte Signal von der ersten Median-Filtereinrichtung (31) empfängt und es über einen vorgegebenen kritischen Wert hinaus zensiert; und
eine erste Anordnungsstatistik-Filtereinrichtung (33), die das von der ersten Zensureinrichtung (32) zensierte Signal empfängt, einen ersten vorgegebenen Wichtungsfaktor auf das empfangene Signal anwendet und das Ergebnis ausgibt.

3. Vorrichtung nach Anspruch 1 oder 2, wobei die Vorrichtung des weiteren umfaßt:
eine erste Verzögerungseinrichtung (34), die das Eingangs-Zeilensprungabtastungssignal um eine vorgegebene Zeit verzögert;
eine Subtraktionseinrichtung (30a), die das Ausgangssignal der ersten Anordnungstatistik-Filtereinrichtung (33) vom Ausgangssignal der ersten Verzögerungseinrichtung (34) subtrahiert und anschließend ein Fehlersignal ausgibt;
eine zweite Filtereinrichtung (35, 36, 38), die das Ausgangssignal der Subtraktionseinrichtung Doppel-Glättung unterzieht;
eine zweite Verzögerungseinrichtung (37), die das Ausgangssignal der ersten Anordnungsstatistik-Filtereinrichtung (33) um eine vorgegebene Zeit verzögert; und
eine Addiereinrichtung (30b), die das doppelt geglättete Signal zu dem Ausgangssignal der zweiten Verzögerungseinrichtung (37) addiert und anschließend die Summe der Interpolationssignal-Erzeugungseinrichtung (40) zuführt.

4. Vorrichtung nach Anspruch 3, wobei die zweiten Filtereinrichtung (35, 36, 38) umfaßt:
eine zweite Median-Filtereinrichtung (35), die Median-Filtern des Ausgangssignals der Subtraktionseinrichtung (30a) ausführt;
eine zweite Zensureinrichtung (36), die das von der zweiten Median-Filtereinrichtung (35) mediangefilterte Signal zensiert; und
eine zweite Anordnungsstatistik-Filtereinrichtung (38), die Anwendungsstatistik-Filtern des von der zweiten Zensureinrichtung (36) zensierten Signals ausführt.

5. Vorrichtung nach einem der vorangehenden Ansprüche, wobei der kritische Wert für das Zensieren bestimmt wird, indem das Ausgangssignal der ersten Median-Filtereinrichtung (31) zu der Standardabweichung (σ) der Rauschverteilung addiert wird.

6. Vorrichtung nach einem der vorangehenden Ansprüche, wobei der kritische Wert für das Zensieren aus einer Pegeldifferenz (h) an einer Kante von Eingangsdaten bestimmt wird.

7. Vorrichtung nach Anspruch 6, wenn abhängig von Anspruch 5, wobei der kritische Wert so ausgewählt wird, daß er der niedrigere von zwei Werten, d.h. einem Wert, der auf der Standardabweichung (σ) beruht, und einem Wert ist, der auf der Pegeldifferenz (h) beruht.

8. Vorrichtung nach Anspruch 5 oder 7, wobei die Vorrichtung des weiteren eine Rauscherfassungseinrichtung (50) umfaßt, die das eingegebene Zeilensprungabtastungssignal empfängt und das Ausmaß des in dem Eingangssignal enthaltenen Rauschens erfaßt und anschließend die Standardabweichung (σ) der Rauschverteilung den Zensureinrichtungen (32, 36) zuleitet.

9. Vorrichtung nach Anspruch 8, wobei die Vorrichtung des weiteren eine Umschalteinrichtung (SW) umfaßt, die einen ersten Eingangsanschluß aufweist, an den das Zeilensprungabtastungssignal angelegt wird, einen zweiten Eingangsanschluß, an den das Ausgangssignal der Doppel-Glättungsschaltung (30) angelegt wird, sowie einen Ausgangsanschluß, der mit der Interpolationssignal-Erzeugungseinrichtung (40) verbunden ist, wobei die Umschalteinrichtung (SW) entsprechend dem Ausmaß des Rauschens, das von der Rauscherfassungseinrichtung (50) erfaßt wird, einen Umschaltvorgang ausführt.

10. Vorrichtung nach einem der Ansprüche 2 bis 9, wobei die erste Anordnungsstatistik-Filtereinrichtung (33) einen Wichtungsfaktor als einen konstanten Wert festlegt und dann einen Mittelwert errechnet, wenn Pixeldaten eines zensierten Eingangssignals größer sind als eine erste vorgegebene Anzahl oder ihr entsprechen, einen Medianwert weiterleitet, wenn Pixeldaten eines eingegebenen zensierten Signals geringer sind als eine zweite vorgegebene Anzahl oder ihr entsprechen, und eine Vielzahl von Wichtungsfaktoren festlegt, die linear gefiltert werden, wenn die Anzahl von Pixeldaten eines zensierten Eingangssignals zwischen der ersten und-der zweiten vorgegebenen Anzahl liegt.

11. Vorrichtung nach einem der vorangehenden Ansprüche, wobei die Interpolationssignal-Erzeugungseinrichtung (40) umfaßt:
eine Abtastzeilen-Verzögerungseinrichtung (41), die das Ausgangssignal der Doppel-Glättungsschaltung (30) um eine Abtastzeilenperiode verzögert;
eine Bildverzögerungseinrichtung (42), die das Ausgangssignal der Abtastzeilen-Verzögerungseinrichtung (41) um eine Bildperiode verzögert; und
eine Medianwerteinrichtung (43), die die Ausgangssignale der Doppel-Glättungsschaltung (3), der Abtastzeilen-Verzögerungseinrichtung (41) und der Bildverzögerungseinrichtung (42) empfängt und daraus einen Mittelwert errechnet.

12. Vorrichtung nach Anspruch 11, wobei die Einrichtung (44) zur Erzeugung eines Signals fortlaufender Abtastung die Ausgangssignale der Abtastzeilen-Verzögerungseinrichtung (41) und der Medianwerteinrichtung (43) empfängt und dann alternativ zwei Eingangssignale mit einer doppelten Geschwindigkeit des Eingangssignals ausgibt.

13. Verfahren zur Umwandlung von Zeilensprungabtastung in fortlaufende Abtastung mit einer Doppel-Glättungsfunktion, bei dem ein Fernsehsignal mit Zeilensprungabtastung in ein Femsehsignal mit fortlaufender Abtastung umgewandelt wird, wobei das Verfahren die folgenden Schritte umfaßt:
einen Doppel-Glättungsschritt, bei dem ein Signal mit Zeilensprungabtastung empfangen und dieses einem Doppel-Glättungsvorgang unterzogen wird;
einen Interpolationssignal-Erzeugungsschritt, bei dem ein Zeilenverzögerungssignal und ein Interpolation-Abtastzeilensignal aus dem Ausgangssignal des Doppel-Glättungsschrittes erzeugt wird; und
einen Schritt des Erzeugens eines Signals fortlaufender Abtastung, bei dem ein Signal fortlaufender Abtastung aus den in dem Interpolationssignal-Erzeugungsschritt erzeugten Signalen erzeugt wird,
**gekennzeichnet durch:**
einen Median-Filterschritt, bei dem Median-Filtem des Eingangssignals mit Zeilensprungabtastung ausgeführt wird;
einen Zensierschritt, bei dem das mediangefilterte Signal, das in dem Median-Filterschritt ausgegeben wird, über einen vorgegebenen kritischen Wert hinaus zensiert wird; und
einen Anordnungsstatistik-Filter-Schritt, bei dem das in dem Zensierschritt zensierte Signal empfangen wird, ein vorgegebener Wichtungsfaktor auf das empfangene Signal angewendet wird und anschließend das Ergebnis ausgegeben wird.

14. Verfahren nach Anspruch 13, wobei das Verfahren des weiteren die folgenden Schritte umfaßt:
erstens Verzögern des eingegebenen Zeilensprungabtastungssignals um eine vorgegebene Zeit;
Subtrahieren des Ausgangssignals aus dem Anordnungsstatistik-Filter-Schritt von dem Ausgangssignal aus dem ersten Verzögerungsschritt;
Doppel-Glättung des Ausgangssignals aus dem Subtraktionsschritt;
zweitens Verzögern des Ausgangssignals aus dem Anordnungsstatistik-Filter-Schritt um eine vorgegeben Zeit; und
Addieren des doppelt geglätteten Signals und des Ausgangssignals aus dem zweiten Verzögerungsschritt und anschließend Zuleiten der entstandenen Summe zu dem Interpolationssignal-Erzeugungsschritt.

15. Verfahren nach Anspruch 13 oder 14, wobei der kritische Wert bestimmt wird, indem das Ausgangssignal aus dem Median-Filterschritt zu der Standardabweichung (σ) des dem Ausgangsignal beigemischten Rauschens addiert wird.

16. Verfahren nach Anspruch 13, 14 oder 15, wobei der kritische Wert aus der Pegeldifferenz (h) an der Kante von Eingangsdaten bestimmt wird.

17. Verfahren nach Anspruch 14 oder Anspruch 15 oder 16, wenn abhängig von Anspruch 14, wobei der Doppel-Glättungsschritt die folgenden Schritte umfaßt:
Median-Filtern des in dem Subtraktionsschritt ausgegebenen Signals;
Zensieren des in dem Median-Filterschritt Median-Filtern unterzogenen Signals; und
Anordnungsstatistik-Filtern des in dem Zensierschritt zensierten Signals.

18. Verfahren nach einem der Ansprüche 13 bis 17, wobei der Interpolationssignal-Erzeugungsschritt die folgenden Schritte umfaßt:
Verzögem des Ausgangssignals aus dem Anordnungsstatistik-Filter-Schritt um eine vorgegebene Abtastzeilenperiode;
Verzögern des Ausgangssignals aus dem Absatzzeilen-Verzögerungsschritt um eine vorgegebene Bildperiode; und
Empfangen der Ausgangssignale aus dem Anordnungsstatistik-Filter-Schritt, dem Abtastzeilen-Verzögerungsschritt und dem Bildverzögerungsschritt und anschließendes Errechnen des Mittelwertes desselben.

19. Verfahren nach einem der Ansprüche 13 bis 18, wobei das Verfahren des weiteren einen Rauscherfassungsschritt umfaßt, in dem das Eingangssignal mit Zeilensprungabtastung empfangen wird und das Ausmaß des in dem eingegebenen Signal enthaltenen Rauschens erfaßt wird und anschließend der Standardabweichungswert, entsprechend dem Ausmaß desselben variiert, dem Zensierschritt zugeleitet wird.

20. Verfahren nach Anspruch 19, wobei das Verfahren des weiteren einen Auswählschritt umfaßt, in dem das Signal mit Zeilensprungabtastung oder das Ausgangssignal aus dem Anordnungsstatistik-Filter-Schritt entsprechend dem Ausmaß des in dem Rauscherfassungsschritt erfaßten Rauschens ausgewählt wird und das ausgewählte Signal an den Abtastzeilen-lnterpolationsschritt ausgegeben wird.

21. Verfahren nach einem der Ansprüche 13 bis 22, wobei in dem Anordnungsstatistik-Filter-Schritt ein Wichtungsfaktor als ein konstanter Wert festgelegt wird, um so den Mittelwert zu errechnen, wenn die Pixeldaten des eingegebenen zensierten Signals größer sind als eine erste vorgegebene Anzahl oder ihr entsprechen, ein Medianwert weitergeleitet wird, wenn die Pixeldaten des eingegebenen zensierten Signals geringer sind als eine zweite vorgegebene Anzahl oder ihr entsprechen, und eine Vielzahl von Wichtungsfaktoren festgelegt und linear gefiltert wird, wenn die Pixeldaten des eingegebenen zensierten Signals zwischen der ersten und der zweiten vorgegebenen Anzahl liegen.

22. Verfahren nach einem der Ansprüche 13 bis 22, wobei in dem Schritt zur Erzeugung eines Signals fortlaufender Abtastung die Ausgangssignale aus dem Abtastzeilen-Verzögerungsschritt und dem Median-Schritt empfangen werden und alternativ zwei Eingangssignale mit einer doppelten Geschwindigkeit des Eingangssignals ausgegeben werden.

## Revendications

1. Appareil de transformation de balayage entrelacé en balayage non entrelacé ayant une fonction de lissage double, dans lequel un signal de télévision à balayage entrelacé est transformé en un signal de télévision à balayage non entrelacé, ledit appareil comprenant :
un circuit de lissage double (30) pour recevoir un signal à balayage entrelacé d'entrée et pour effectuer une fonction de lissage double sur ce dernier ;
des moyens de production de signal d'interpolation (40) pour produire un signal retardé de ligne et un signal d'interpolation de ligne de balayage à partir d'un signal de sortie dudit circuit de lissage double ; et
des moyens (44) pour produire un signal de balayage non entrelacé à partir des signaux produits par lesdits moyens de production de signal d'interpolation (40) ;
caractérisé en ce que ledit circuit de lissage double comprend :
des premiers moyens formant filtre (31, 32, 33) pour un filtrage médian dudit signal vidéo à balayage entrelacé d'entrée, pour appliquer un coefficient de pondération selon le degré auquel le signal filtré dépasse une valeur critique prédéterminée et pour sortir le résultat.

2. Appareil selon la revendication 1, dans lequel lesdits premiers moyens formant filtre (31, 32, 33) comprennent :
des premiers moyens de filtrage médian (31) pour un filtrage médian dudit signal à balayage entrelacé d'entrée ;
des premiers moyens de coupure (32) pour recevoir le signal ayant subi un filtrage médian en provenance desdits premiers moyens de filtrage médian (31) et pour le couper au-delà d'une valeur critique prédéterminée ; et
des premiers moyens OSF de filtrage statistique d'ordre (33) pour recevoir le signal coupé par lesdits premiers moyens de coupure (32), pour fixer un coefficient de pondération prédéterminé pour le signal reçu et pour sortir le résultat.

3. Appareil selon la revendication 1 ou 2, ledit appareil comprenant, de plus :
des premiers moyens de retard (34) pour retarder ledit signal à balayage entrelacé d'entrée pendant un temps prédéterminé ;
des moyens de soustraction (30a) pour soustraire le signal de sortie desdits premiers moyens OSF (33) à partir du signal de sortie desdits premiers moyens de retard (34) et pour sortir ensuite un signal d'erreur ;
des seconds moyens de filtrage (35, 36, 38) pour faire subir un lissage double au signal de sortie en provenance desdits moyens de soustraction ;
des seconds moyens de retard (37) pour retarder le signal de sortie desdits premiers moyens OSF (33) pendant un temps prédéterminé ; et
des moyens d'addition (30b) pour ajouter ledit signal ayant subi un lissage double au signal de sortie desdits seconds moyens de retard (37) et pour délivrer ensuite la somme auxdits moyens de production de signal d'interpolation (40).

4. Appareil selon la revendication 3, dans lequel lesdits seconds moyens de filtrage (35, 36, 38) comprennent :
des seconds moyens de filtrage médian (35) pour faire subir un filtrage médian au signal de sortie en provenance desdits moyens de soustraction (30a) ;
des seconds moyens de coupure (36) pour couper le signal ayant subi un filtrage médian par lesdits seconds moyens de filtrage médian (35) ; et
des seconds moyens OSF de filtrage statistique d'ordre (38) pour un filtrage statistique d'ordre du signal coupé par lesdits seconds moyens de coupure (36).

5. Appareil selon l'une quelconque des revendications précédentes, dans lequel ladite valeur critique pour la coupure est obtenue en ajoutant le signal de sortie desdits premiers moyens de filtrage médian (31) à l'écart standard (σ) de la répartition de bruit.

6. Appareil selon l'une quelconque des revendications précédentes, dans lequel ladite valeur critique pour la coupure est obtenue à partir d'une différence de niveau (h) au niveau d'une limite de données d'entrée.

7. Appareil selon la revendication 6 lorsqu'elle est dépendante de la revendication 5, dans lequel ladite valeur critique est sélectionnée pour être la plus basse d'une valeur basée sur ledit écart standard (σ) ou d'une valeur basée sur ladite différence de niveau (h).

8. Appareil selon les revendications 5 ou 7, ledit appareil comprenant, de plus, des moyens de détection de bruit (50) pour recevoir ledit signal à balayage entrelacé d'entrée et pour détecter le degré de bruit inclus dans le signal d'entrée et pour délivrer ensuite l'écart standard (σ) de la répartition de bruit auxdits moyens de coupure (32, 36).

9. Appareil selon la revendication 8, ledit appareil comprenant, de plus, des moyens de commutation (SW) ayant une première borne d'entrée à laquelle on applique ledit signal à balayage entrelacé, une seconde borne d'entrée à laquelle on applique le signal de sortie dudit circuit de lissage double (30) et une borne de sortie qui est reliée auxdits moyens de production de signal d'interpolation (40), les moyens de commutation (SW) étant conçus pour effectuer une opération de commutation selon le degré du bruit détecté par lesdits moyens de détection de bruit (50).

10. Appareil selon l'une quelconque des revendications 2 à 9, dans lequel lesdits premiers moyens OSF (33) fixent un coefficient de pondération en tant que valeur constante pour calculer ensuite une valeur moyenne si des données d'élément d'image (pixel) d'un signal coupé d'entrée sont supérieures ou égales à un premier nombre prédéterminé, passent par une valeur médiane si des données d'élément d'image d'un signal coupé d'entrée sont inférieures ou égales à un second nombre prédéterminé, et fixent une pluralité de coefficients de pondération de façon à être filtrés de façon linéaire si le nombre de données d'élément d'image d'un signal coupé d'entrée parvient entre des premier et second nombres prédéterminés.

11. Appareil selon l'une quelconque des revendications précédentes, dans lequel lesdits moyens de production de signal d'interpolation (40) comprennent :
des moyens de retard de ligne de balayage (41) pour retarder le signal de sortie dudit circuit de lissage double (30) d'une seule période de ligne de balayage ;
des moyens de retard de trame (42) pour retarder le signal de sortie desdits moyens de retard de ligne de balayage (41) d'une seule période de trame ; et
des moyens médians (43) pour recevoir chaque signal de sortie du circuit de lissage double (3), des moyens de retard de ligne de balayage (41) et des moyens de retard de trame (42) et pour calculer de ce fait une valeur moyenne de ces derniers.

12. Appareil selon la revendication 11, dans lequel lesdits moyens de production de signal de balayage non entrelacé (44) reçoivent chaque signal de sortie desdits moyens de retard de ligne de balayage (41) et desdits moyens médians (43) et sortent ensuite en alternance deux signaux d'entrée à une vitesse double du signal d'entrée.

13. Procédé de transformation de balayage entrelacé en balayage non entrelacé ayant une fonction de lissage double, dans lequel un signal de télévision à balayage entrelacé est transformé en un signal de télévision à balayage non entrelacé, le procédé comprenant les étapes suivantes :
une étape de lissage double pour recevoir un signal de balayage entrelacé et pour effectuer une fonction de lissage double sur ce dernier ;
une étape de production de signal d'interpolation pour produire un signal retardé de ligne et un signal d'interpolation de ligne de balayage à partir du signal de sortie de l'étape de lissage double ; et
une étape de production de signal de balayage non entrelacé pour produire un signal à balayage non entrelacé à partir des signaux produits par ladite étape de production de signal d'interpolation,
caractérisé par :
une étape de filtrage médian pour faire subir un filtrage médian au signal à balayage entrelacé d'entrée ;
une étape de coupure pour couper le signal ayant subi un filtrage médian sorti par ladite étape de filtrage médian au-delà d'une valeur critique prédéterminée ; et
une étape OSF de filtrage statistique d'ordre pour recevoir le signal coupé par ladite étape de coupure, pour fixer un coefficient de pondération prédéterminé pour le signal reçu et pour sortir ensuite le résultat.

14. Procédé selon la revendication 13, ledit procédé comprenant, de plus, les étapes suivantes :
en premier lieu, retard dudit signal à balayage entrelacé d'entrée d'un temps prédéterminé ;
soustraction du signal de sortie de ladite étape de filtrage statistique d'ordre (OSF) dudit signal de sortie de ladite première étape de retard ;
lissage double du signal de sortie de ladite étape de soustraction ;
en second lieu, retard du signal de sortie de ladite étape OSF d'un temps prédéterminé ; et
sommation dudit signal ayant subi un lissage double et du signal de sortie de ladite seconde étape de retard et ensuite de délivrance de la somme résultante à ladite étape de production de signal d'interpolation.

15. Procédé selon la revendication 13 ou 14, dans lequel ladite valeur critique est obtenue en ajoutant le signal de sortie de ladite étape de filtrage médian à l'écart standard (σ) du bruit mélangé audit signal de sortie.

16. Procédé selon la revendication 13, 14 ou 15, dans lequel ladite valeur critique est obtenue à partir de la différence de niveau (h) au niveau de la limite de données d'entrée.

17. Procédé selon la revendication 14, ou les revendications 15 ou 16 lorsque dépendantes de la revendication 14, dans lequel ladite étape de lissage double comprend les étapes suivantes :
filtrage médian dudit signal sorti par ladite étape de soustraction ;
coupure du signal ayant subi un filtrage médian par ladite étape de filtrage médian ; et
filtrage statistique d'ordre OSF du signal coupé par ladite étape de coupure.

18. Procédé selon l'une quelconque des revendications 13 à 17, dans lequel ladite étape de production de signal d'interpolation comprend les étapes suivantes :
retard du signal de sortie de ladite étape OSF d'une période de ligne de balayage prédéterminée ;
retard du signal de sortie de ladite étape de retard de ligne de balayage d'une période de trame prédéterminée ; et
réception de chaque signal de sortie de ladite étape OSF, de ladite étape de retard de ligne de balayage et de ladite étape de retard de trame, et ensuite calcul de la valeur médiane de ces derniers.

19. Procédé selon l'une quelconque des revendications 13 à 18, dans lequel le procédé comprend, de plus, une étape de détection de bruit pour recevoir ledit signal à balayage entrelacé d'entrée et de détection du degré du bruit inclus dans le signal d'entrée et ensuite délivrance de la valeur d'écart standard modifiée selon le degré de ce dernier à ladite étape de coupure.

20. Procédé selon la revendication 19, ledit procédé comprenant, de plus, une étape de sélection pour sélectionner ledit signal à balayage entrelacé ou le signal de sortie de ladite étape OSF selon le degré du bruit détecté dans ladite étape de détection de bruit et sortie du signal sélectionné vers ladite étape d'interpolation de ligne de balayage.

21. Procédé selon l'une quelconque des revendications 13 à 22 dans lequel, dans ladite étape OSF, un coefficient de pondération est fixé en tant que valeur constante pour calculer, de ce fait, la valeur moyenne si les données d'élément d'image du signal coupé d'entrée sont supérieures ou égales à un premier nombre prédéterminé, une valeur médiane est passée si les données d'élément d'image du signal coupé d'entrée sont inférieures ou égales à un second nombre prédéterminé, et une pluralité de coefficients de pondération sont fixés de façon à subir un filtrage linéaire si les données d'élément d'image du signal coupé d'entrée parviennent entre les premier et second nombres prédéterminés.

22. Procédé selon l'une quelconque des revendications 13 à 22, dans lequel, dans ladite étape de production de signal à balayage non entrelacé, chaque signal de sortie de ladite étape de retard de ligne de balayage et de ladite étape médiane est reçu, et deux signaux d'entrée sont sortis en alternance à une vitesse double du signal d'entrée.
